# EUROPÄISCHE PATENTANMELDUNG

(11) **EP 0 698 508 A2**
(43) Veröffentlichungstag der Anmeldung: **28.02.1996**
(21) Anmeldenummer: 95110552.7
(22) Anmeldetag: 06.07.1995
(51) Int. Cl.: B60B 1/06, B60B 1/08

(54) **Rad für ein Kraftfahrzeug**

(30) Priorität: 27.08.1994 DE 4430490; 06.10.1994 DE 4435666
(71) Anmelder: Dr.Ing.h.c. F. Porsche Aktiengesellschaft, D-70435 Stuttgart (DE)
(72) Erfinder: Stach, Jens, D-71735 Eberdingen (DE)

(57) **Zusammenfassung**

Es wird ein Rad für ein Kraftfahrzeug, aus einem Leichtmetall bestehend, beschrieben, das einen Radstern (2) mit Hohlspeichen umfasst, der mittels einer Schweißung mit einem Felgenring (3) verbunden ist. Der Radstern (2) besteht aus einem Gußteil und der Felgenring ist in einem Drückverfahren herstellbar und beide Radelemente sind über eine Reibschweißung miteinander verbunden.

## Beschreibung

Die Erfindung bezieht sich auf ein Rad für ein Kraftfahrzeug nach dem Oberbegriff des Anspruchs 1.

Aus der DE 41 38 558 C2 ist ein Rad und ein Verfahren zur Herstellung des Rades bekannt. Dieses Rad besteht aus einem Hohlspeichen umfassenden Radstern, der mit einem Felgenring über eine Reibschweißung verbunden ist. Desweiteren ist aus der DE 31 10 756 ein Verfahren zur Herstellung einer Aluminiumfelge bekannt geworden, wobei der Felgenring im Drückverfahren hergestellt wird.

Aufgabe der Erfindung ist es, ein Rad für ein Kraftfahrzeug zu schaffen, das aus zwei geschweißt verbundenen Radelementen wie einem Radstern und einem Felgenring besteht, die in beliebigen Werkstoffpaarungen herzustellen sind.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Möglichkeit der Einzelherstellung und der Verbindung der beiden Radelemente wie einem Radstern mit einem Felgenring mittels einer Reibschweißung in einfacher Bauweise eine dem speziellen Verwendungszweck entsprechende Werkstoffpaarung von Radstern und Felgenring gewählt werden kann. So ist aufgrund des spezifischen Gewichts von Magnesium ein aus einem derartigen Werkstoff hergestelltes Rad bzw. sind die Radteile gewichtsmäßig leichter als ein aus einer Aluminiumlegierung hergestelltes Rad. Die Verwendung von Titan für die Radteile ergibt festigkeitsmäßig Vorteile und eine Reibschweißverbindung der Radteile ist optimal. Ein im Drückverfahren hergestellter Felgenring ist beim Herstellverfahren einer gewissen Verdichtung des Gefüges unterworfen, so daß eine Luftdurchlässigkeit unterbunden wird, was bei einem nur gegossenen und nicht gedrückten Felgenring unter Umständen nicht gewährleistet ist. Um dies zu verhindern, wird ein nur gegossener Felgenring meist mit einem Lack bzw. mit Lackschichten innenseitig abgedichtet, damit der Reifeninnenraum luftdicht gehalten wird.

Insbesondere kann bei einem Felgenring aus Magnesium eine Luftdurchlässigkeit auftreten, so daß es vorteilig ist, diesen anschließend mittels eines Drückverfahrens fertigzustellen, wodurch zusätzliche Arbeitsgänge, insbesondere das Auftragen von Lackschichten, vermieden wird.

Desweiteren hat sich in der Praxis herausgestellt, daß ein Radstern aus Magnesium relativ stark korrodiert, zumal im Winterbetrieb, wenn der Radstern den Einflüssen von Salz und Wasser in Kombination ausgesetzt ist. Es ist somit die Paarung von einem Felgenring aus Magnesium und einem Radstern aus einer Aluminiumlegierung vorteilig.

Bei Radelementen aus einer Titanlegierung ergeben sich neben Gewichtsvorteilen auch Festigkeitsvorteile. Eine gute Gießbarkeit des aus Titan bestehenden Felgenringes sowie des Radsterns ist gewährleistet, wobei auch die Bearbeitbarkeit von Titan-Radelementen einfach durchzuführen ist.

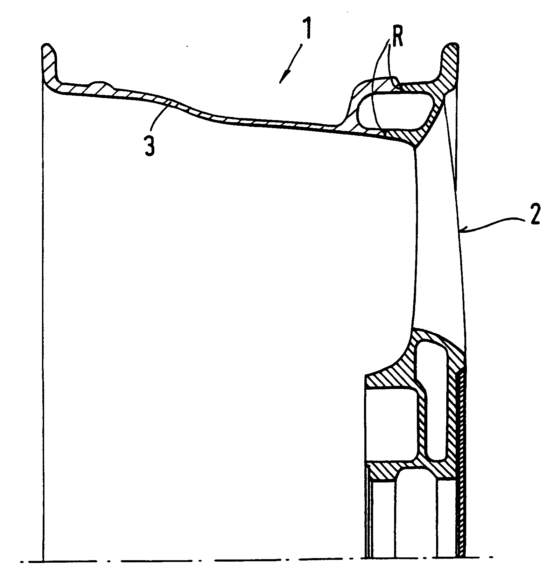

In der Zeichnung ist ein Rad teilweise und im Schnitt dargestellt.

Das Rad 1 umfasst im wesentlichen einen Hohlspeichen aufweisenden Radstern 2, der über eine Reibschweißung R mit einem Felgenring 3 verbunden ist.

Der Radstern 2 ist jeweils als Gußteil ausgeführt, wobei der Felgenring 3 im Drückverfahren oder im Gußverfahren hergestellt sein kann.

Der Felgenring 3 besteht vorzugsweise aus einem Leichtmetall wie einem Magnesium-Werkstoff bzw. aus einer Magnesiumlegierung, Titan bzw. einer Titanlegierung und kann in einer weiteren Ausführung auch aus einer Aluminiumlegierung bzw. Aluminium bestehen.

Wegen der guten Wärmeleitfähigkeit des Magnesiums treten bei einteiligen Mg-Gußrädern im Felgenbett Luftdurchlässigkeiten auf, so daß es vorteihaft ist, beide Radelemente einzeln zu gießen.

Aufgrund der Verbindung der beiden Radelemente 2 und 3 über die Reibschweißung R kann eine beliebige Werkstoffpaarung von Radstern 2 und Felgenring 3 gewählt werden.

Es sind die folgenden Werkstoffpaarungen der beiden Radelemente 2 und 3 möglich:
- a): gegossener Radstern aus Magnesium,
gedrückter Felgenring aus Magnesium;
- b): gegossener Radstern aus einer Aluminiumlegierung,
gedrückter Felgenring aus Magnesium;
- c): gegossener Radstern aus einer Aluminiumlegierung,
gedrückter Felgenring aus einer Aluminiumlegierung;
- d): gegossener Radstern aus einer Aluminiumlegierung,
gegossener Felgenring aus einer Titanlegierung;
- e): gegossener Radstern aus einer Magnesiumlegierung,
gegossener Felgenring aus einer Titanlegierung;
- f): gegossener Radstern aus einer Titanlegierung,
gegossener Felgenring aus einer Titanlegierung.
- g): gegossener Radstern aus Magnesium,
gegossener Felgenring aus Magnesium.

Diese Paarungen von Radstern 2 mit Felgenring 3 in verschiedenen Werkstoffen werden in vorteilhafter Weise durch die Reibschweißung ermöglicht, da die stoffschlüssige Verbindung zwischen diesen Leichtmetall-Materialien eine innige metallische und sichere Verbindung ergibt.

## Patentansprüche

1. Rad für ein Kraftfahrzeug, aus einem Leichtmetall bestehend, mit einem Hohlspeichen umfassenden Radstern, der mittels einer Schweißung mit einem Felgenring verbunden ist, **dadurch gekennzeichnet**, daß der Radstern (2) aus einem Gußteil besteht und der Felgenring (3) als gegossenes und/oder geschmiedetes Teil in einem Drückverfahren herstellbar ist und beide Radelemente (2 und 3) über eine Reibschweißung (R) miteinander verbindbar sind.

2. Rad nach Anspruch 1, **dadurch gekennzeichnet**, daß der Radstern (2) und der Felgenring (3) aus einer Magnesiumlegierung bestehen.

3. Rad nach Anspruch 1, **dadurch gekennzeichnet**, daß der Radstern (2) und der Felgenring (3) aus einer Aluminiumlegierung bestehen.

4. Rad nach Anspruch 1, **dadurch gekennzeichnet**, daß der Radstern (2) aus einer Aluminiumlegierung und der Felgenring (3) aus einer Magnesiumlegierung besteht.

5. Rad nach Anspruch 1, **dadurch gekennzeichnet**, daß der Radstern (2) aus einer Aluminiumlegierung und der Felgenring (3) aus einer Titanlegierung besteht.

6. Rad nach Anspruch 1, **dadurch gekennzeichnet**, daß der Radstern (2) aus einer Magnesiumlegierung und der Felgenring (3) aus einer Titanlegierung besteht.

7. Rad nach Anspruch 1**, dadurch gekennzeichnet**, daß der Radstern (2) und der Felgenring (3) aus einer Titanlegierung bestehen.
